# EUROPEAN PATENT APPLICATION

(11) **EP 2 679 499 A2**
(43) Date of publication of application: **01.01.2014**
(21) Application number: 13170341.5
(22) Date of filing: 04.06.2013
(51) Int. Cl.: B64D 13/00, B64D 25/00

(54) **Emergency oxygen device, oxygen supply system and method for activating an emergency oxygen device for at least one passenger of an aircraft**

(30) Priority: 28.06.2012 EP 12174217
(71) Applicant: INTERTECHNIQUE, 78373 Plaisir Cedex (FR)
(72) Inventor: Hollm, Marco, 25524 Oelixdorf (DE); Weinmann, Hasso, 23564 Lübeck (DE); Boomgaarden, Günter, 23684 Scharbeutz (DE); Niedostatek, Mark, 21279 Wenzendorf (DE); Meckes, Rüdiger, 23919 Berkenthin (DE); Rittner, Wolfgang, 23623 Ahrensbök (DE)
(74) Representative: Eisenführ Speiser

(57) **Abstract**

The invention relates to an emergency oxygen device (100) for at least one passenger of an aircraft, comprising a chemical oxygen generator (21) and/or oxygen pressure cylinder including an oxygen source (20) and a starter unit (22) adapted for initiating a reaction in said oxygen source (20) producing oxygen, at least one oxygen mask (25) each connected with the oxygen source (20) such that an oxygen fluid flow from said oxygen source after said starter unit has initiated the reaction is receivable at the oxygen mask (25), an activation assembly (40) for activating the starter unit (22), and whereby the activation assembly comprises an actuator assembly comprising a shape memory material based actuator (10). The invention further relates to a method for activating an emergency oxygen device (100) for at least one passenger of an aircraft, initiating by means of a starter unit (22) a reaction of an oxygen source (20) producing oxygen, wherein a chemical oxygen generator and/or oxygen pressure cylinder includes the oxygen source, receiving at an oxygen mask (25) an oxygen fluid flow from said oxygen source after said starter unit (22) has initiated the reaction, wherein each of the oxygen masks is connected with the oxygen source (20), activating the starter unit by means of an activation assembly (40), whereby the passengers emergency release action and the reaction initiation of the source are coupled by means of a shape memory material based actuator (10) of an actuator assembly, wherein the activation assembly comprises the actuator assembly.

## Description

The invention relates to an emergency oxygen device for at least one passenger of an aircraft, comprising a chemical oxygen generator and/or oxygen pressure cylinder including an oxygen source and a starter unit adapted for initiating a reaction in said oxygen source producing oxygen, and at least one oxygen mask each connected with the oxygen source such that an oxygen fluid flow from said oxygen source after said starter unit has initiated the reaction is receivable at the oxygen mask and an activation assembly for activating the starter unit. The invention also relates to an oxygen supply system and a method for activating an emergency oxygen device for at least one passenger of an aircraft.

Such emergency oxygen devices are used to supply oxygen to passenger of an aircraft in an emergency situation like a decompression situation or smoke or the like on board of an aircraft. Usually, the oxygen masks are stored above the passenger in a ceiling compartment, e.g. a separate casing, and in case of an emergency are released to fall out of the casing. The oxygen masks then are provided to the passenger at a certain level defined by means to connect the oxygen masks in the dropped state relative to the casing, the oxygen generator or any other fixed point above the passenger.

The chemical oxygen generator comprises one or more substances which are able to conduct a chemical reaction producing oxygen. This chemical reaction must be started in an emergency situation to provide said oxygen to the passenger. To provide an activation assembly for activating the starter unit it is known to initiate said chemical reaction by a starter unit which is activated by a mechanical pulling force exerted by the passenger via the oxygen mask. The starter unit then includes means for a short exothermic reaction sufficient to initiate the chemical reaction which thereafter is conducted as exothermic, self-sustaining reaction.

For exerting said pulling force it is known to provide a lanyard arrangement from said oxygen mask to the activation unit. A general problem associated with such an arrangement is the need to provide a safe and reliable transfer of the pulling force by at the same time offering the oxygen mask to the passenger at a predetermined level which is easily reached by any passenger from children to adults. Further, such lanyard must ensure that the oxygen mask can be pulled down towards the passenger and worn by the passenger in a convenient way. Usually, these requirements are fulfilled by a significant length of the lanyard which however bears the risk that the lanyard entangles and thus produces loops, slings or meshes or even is fixed by joins inside the casing. This may result in the oxygen mask not being properly presented to the passenger or the passenger not being able to pull the mask towards his mouth and nose and to breathe oxygen.

The risk of such entanglement of the lanyards even increases if more than one oxygen mask with corresponding lanyards and oxygen flow tubes are provided inside one casing and are supplied from one chemical oxygen generator. Usually, in order to safe costs and weight, emergency oxygen devices include two, three or even more oxygen masks in one casing and these oxygen masks are provided from one single chemical oxygen generator. In such case, however, it is required that the oxygen generator can be started by each of said oxygen masks via a pulling force or the like. The need for lanyards for each of the oxygen masks and the storage of said lanyards inside the casing in the non-emergency situation bears the significant risk that entanglements occur and hinder a proper function or dropping out of the oxygen masks.

Accordingly, it is a major object of the invention to provide an emergency oxygen device, a system and a method, which form a developed basis for developed handling aspects but also security aspects in an emergency case. In particular, the activation of an emergency oxygen device in an emergency case should be possible in an improved way, in particular also observing conditions of security aspects. It is a further object of the invention to overcome the above mentioned problems and in particular to provide an emergency oxygen device including more than one oxygen mask supplied from one single oxygen source which has a reduced risk of entanglement and an increased reliability in dropping out the oxygen masks to a predetermined appropriate level to the passenger. A further object of the invention is to facilitate a developed positioning of the oxygen masks and/or developed means for activating the chemical oxygen source, in particular also in the course of mounting and maintenance of such an emergency oxygen device.

As relates the device, the object is achieved by the invention by means of an emergency oxygen device for at least one passenger of an aircraft according to an emergency oxygen device as claimed in claim 1. As relates the oxygen supply system, the object is achieved by the invention by means of an oxygen supply system according to claim 14 wherein an arrangement of a number of oxygen supply devices is provided. As relates the method, the object is achieved by the invention by means of the method as claimed in claim 15.

The invention starts from the consideration that handling of an emergency oxygen device should motivate a significant improve; thus a technical concept should be found wherein it is possible to design an activation assembly such that a release thereof is followed by improved actuation of an oxygen source. The proposed concept of the invention has arisen from the desire to continue the effect of a passengers release action of the activation assembly in a particular advantageous way. The invention recognized that an activation assembly comprising an actuator assembly comprising a shape memory material based actuator is particular useful to strengthen security aspects as well as ease the handling of the activation assembly significantly. Particular preferred, the actuator assembly is adapted for coupling a passenger's emergency release action and a generator start. Thus, using a shape memory material based actuator as coupling element between a passenger's emergency release action and a reaction initiation of the oxygen source has turned out to be particular reliable and advantageous for improving an emergency oxygen device in view of the object of the invention.

These and further developed configurations of the invention are further outlined in the dependent claims. Thereby, the mentioned advantages of the proposed concept are even more improved. For each feature of the dependent claims it is claimed independent protection independent from all other features of this disclosure. The concept and the developments thereof are particular useful for an oxygen source provided with oxygen from a chemical oxygen generator. Particular preferred, one or more of the aforementioned oxygen supply devices can be provided in an oxygen supply system in a certain arrangement --like for an alley or row of seats-- in a ceiling panel along an aircraft's cabin.

In a particular preferred development, the activation assembly comprises a mechanical release component adapted for being released by the at least one passenger and a mechanical starter component adapted for automated starting the starter unit. Whereas in contemporary concepts known in the art, the starter unit is activated mechanically basically by the passenger action itself, the preferred development recognized on the one hand that, with regard to security aspects, it is advantageous to basically rely on mechanical parts due to the high security relevance of the emergency oxygen device. On the other hand, also the preferred development is based on the recognition that the coupling of the mechanical parts can be particular useful to improve the overall handling and security aspects of the emergency oxygen device. In the development, the shape memory material based actuator is used as a coupling element between the mechanical release component and the mechanical starter component. Thus, the overall mechanical and very reliable concept for providing activation of the starter unit by means of the activation assembly is confirmed. Further, the shape memory material based actuator allows to provide useful possibilities for relaxing a tight space condition in the surrounding of the emergency oxygen device; i.e. to use the available local space most effectively whereas nevertheless the starter unit is practical directly and mechanically activated by the passenger. As a main advantage of the preferred development, the mechanical release component can be placed remote from the mechanical starter component. Thus the shape memory material based actuator is used to provide a distant location for both components and also secures a safe coupling there between.

Thus, one the one hand, the mechanical release component can be moved nearer to a passenger position and handling thereof will be easier in reach of a passenger in an emergency situation. On the other hand the mechanical starter component can be designed according to an improved fit to the starter unit and activation of the starter unit is provided in a more secure and faster way. Given these advantages, it is also affordable to couple more than one starter unit to one mechanical release component or --vice versa-- couple more than one mechanical release part to a single starter unit.

The actuator assembly comprising a shape memory material based actuator can be adapted accordingly to one of these or similar variants of layouts of a system. Background of the variants in a particular layout of the system is, that it might be preferred to couple one or more separate oxygen masks to a single oxygen source. Thereby, entanglement or the like hazardous situations upon dropping oxygen masks can be prevented. Also a design can be afforded, wherein each passenger not necessarily has to activate his own oxygen mask. Instead, for instance, a single mechanical release component can be provided per row or alley of passengers. Each passenger may have an associated mechanical release component, but each of the mechanical release components of a group of components (e.g. per row or alley of seats) can be associated with a single actuator assembly comprising the shape memory material based actuator coupled to a single mechanical starter component. This allows advantageously that a single activation per group, e.g. row or alley, of passengers already provides all passengers of the group an available, i.e. dropped, oxygen mask. The preferred development found that the actuator assembly comprising a shape memory material based actuator is particular reliable and secure for providing the coupling, even complex coupling, between a mechanical release component for a passenger and a mechanical starter component for the starter unit of the oxygen source.

In particular, the actuator assembly comprises a power unit for powering that shape memory material based actuator upon activation of a switch. Preferably, the switch is the switch of the power unit and the switch is directly releasable by the passenger. For instance, the switch can be formed or connected with a lanyard release pin or the like. And the lanyard release pin may be completed with a ring or the like for easy to grip handle for the passenger.

In particular, the power unit directly powers the shape memory material based actuator. When actuated, due to form and/or size amendment of the shape memory material, an actuation of a mechanical starter component is directly effected. In a particular preferred development, also the mechanical starter component can be formed as a lanyard release pin, in particular connected via a ring or the like to the shape memory material based actuator. Thus, taking the aforementioned development in combination, the activation assembly follows the concept to lengthen a release member handled by the passenger in an emergency situation. Said lengthening is provided in a particular secure and effective way by means of the shape memory material based actuator.

In the instant development the electrical powering can be provided for instance by means of a safe power source connected to the board net, battery, capacity or an independent energy element, like an energy harvesting element or the like powering unit.

In a preferred development, for secure fit and/or positioning and/or hold of the shape memory material based actuator, a fixation element is provided. A fixation element is to be understood in broad means and comprises any kind of guidance, channeling, casing or the like mount of the shape memory material based actuator. A secure fixation element has the advantage that, upon powering of the shape memory material, any movement thereof is --without or particular low loss-- turned into displacement of the mechanical starter component. Thus, any loosening or waist of movement is avoided by a preferred fixation element or a combination of fixation elements.

Particularly preferred, the shape memory material based actuator is formed as an elongate, in particular flexible bended member connected to the mechanical release component and the mechanical starter component. Particular preferred is a wire or a rod or any kind of other elongate bar or the like member. In a particular preferred development, the elongate member is flexible bended in form of wind up wire. The winding up, reversing or other kind of reverting of the shape memory material allows to increase an absolute amplitude of the movement and/or increase of a pivoting and/or levering effect exerted to the mechanical starter component upon powering of the memory shape material.

In a particular development, a tube or the like guidance is provided for the shape memory material, in particular in a case wherein the shape memory material is in for of a wire. The wind-up wired shape memory material will show a particular large amplitude once powered by electrical power. Thus --given the situation that available space is low-- a high package density of the shape memory material will nevertheless result in a large amplitude for movement of the starter component. Thereby reliability of activation of the mechanical starter component is improved. In particular, the shape memory material can be mechanically biased; thus, any loosening or movement amplitude loss is prevented.

Also the form of the shape memory material based actuator can be adapted to the form of a mechanical release component and/or mechanical starter component. Particular preferred is for each release pin to be activated wire-formed shape memory material based actuator.

Generally, the shape memory material can be broadly formed by various shape memory substances. Particular preferred and reliable is a shape memory material in form of a metal or alloy. These and other kinds of shape memory substances have turned out to be preferably powered by electrical power and, thus, exhibit pseudo-elastic properties upon electrical power exertion which can usefully be implemented into the concept of the developments and the concept of the invention. In a particular in a development, the shape memory effects are reversible upon exertion or omission of electrical power to the shape memory material. Thus, in principle also possible is a shape memory polymer or elastomer or dielectric material.

In a particular preferred added value development of the instant concept, a further actuator assembly comprises a shape memory material based actuator. The further actuator assembly is provided for actuating a release of a container door, wherein an oxygen mask is stored in the container. Thus, upon activation of the mechanical release component by the passenger, oxygen flow is initiated, whilst also opening of the container door--to effect dropping of one or more oxygen masks-- is achieved immediately and synchronously. Due to simultaneous activation time of both effects by one emergency action of the passenger, the chain of most important emergency measures --namely initiation of oxygen flow and dropping of oxygen masks-- is effected as secure and as fast as possible. The concept based on a shape memory material, in particular shape memory alloy, allows to unify this concept, in particular with a single power unit. Thus, in particular, upon activation of a single switch of the power unit, a passenger or a number of passengers will safely receive oxygen and the oxygen mask as soon as possible. In particular, this action can be effected by a single passenger --namely the passenger who is activating the mechanical release component first-- for a whole group of passengers like in row or alley of passengers in an emergency situation.

In a particular preferred development, each of the oxygen masks --even when packed separated-- is preferably connected to a mechanical release component for being released by the at least one passenger.

In the instant development after getting the functionality of the emergency oxygen device the electrical powering for the shape memory material can consequently be interrupted or switched off. The interruption can be realized by interrupting component. The interrupting component can be an active operating component which means for instance a mechanical release pin or a switch For interruption the powering a passive operating component might be also possible for instance a fuse or a disconnection of the shape memory material itself which might be caused by fusing.

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed hereinafter. Further the features described in the description, the drawing and the claims disclosing the invention may be essential for the invention considered alone or in combination. In particular, any reference signs in the claims shall not be construed as limiting the scope of the invention. The wording "comprising" does not exclude other elements or steps. The wording "a" or "an" does exclude a plurality. The wording ,"a number of" items, comprises also the number one, i. e. a single item, and further numbers like two, three, four and so forth.

The drawing shows in:
- Fig. 1: a simplified scheme of a preferred embodiment of an emergency oxygen device to elucidate a working principle;
- Fig. 2: a schematic view of a further embodiment of a developed emergency oxygen device to elucidate an electrical scheme thereof;
- Fig. 3: a schematic cut out section of a container near the container's door to exemplify an embodiment wherein both, flow of oxygen and drop of oxygen mask, is afforded with a first and a second shape memory material based actuator, wherein the second shape memory material based actuator is provided for opening the container door;
- Fig. 4: a flow-chart for exemplifying a sequence of method steps of a preferred embodiment of a method of activating an emergency oxygen device by means of an action of at least one passenger of an aircraft;
- Fig.5A, Fig.5B: an exemplifying further embodiment wherein a schematic cut out section of Fig. 1 of the power unit is shown with the connection to the shape memory alloy for pointing out several possibilities of interrupting an applied current flow to the shape memory alloy.

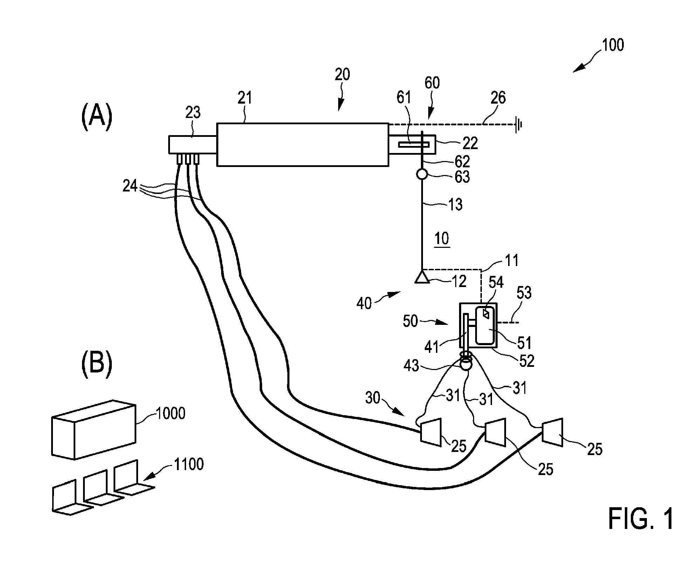

Fig. 1 shows a simplified scheme of an emergency oxygen device 100 in view (A) of Fig. 1. The system can be implemented in a passengers service unit 1000 or the like arrangement of a number of oxygen supply devices in a ceiling panel along an aircraft's cabin, for instance along an aircraft's cabin row or alley of seats 1100 as shown in view (B) of Fig. 1.

The emergency oxygen device 100 has an oxygen source 20, a number of oxygen masks 30 and an activation assembly 40, which is more specifically described in the following. The activation assembly 40 comprises a shape memory material based actuator 10 according to the main concept of the invention exemplified in Fig. 1.

A chemical oxygen generator 21 as shown can be used in as an alternative to an oxygen pressure cylinder or the like device in an oxygen source 20. A chemical oxygen generator is provided in a cylinder kind of box, wherein a chemical substance --like for instance NaClO3 possibly with accelerators for the chemical reaction, like a substance of Fe2O3 or Na2O or the like-- is situated. Further additives for stabilizing and thermally driving and/or stabilizing the chemical reaction can also be provided to the chemical oxygen generator 21. A starter unit 22 can be provided in form of a punch detonator in combination with a pyrotechnical detonation substance. The punch detonator can, for instance, be driven by a spring storage and can be formed as a hammerstick or the like elongate member for punching to the pyrotechnical substance. Once heat is provided to the oxygen containing substance in the generator 21 --in this case basically NaClO3-- oxygen is generated in a reaction to give 02 --and in this case NaCl. Oxygen is then provided by means of an outlet manifold 23 having filters and dampers or the like to a number of -- here three-- mask hoses 24 which each conduct an oxygen fluid flow from the oxygen source 20 of the chemical oxygen generator 21 after said starter unit 22 has initiated the mentioned reaction. The oxygen is received by a number of --here three-- oxygen masks 25 from the masks hoses. The generator 21 is grounded electrically by means of a ground wire 26.

The arrangement of masks 30 comprise masks 25 and each thereof is connected with a number of lanyard cables or lines or threads 31 to the activation assembly 40. Once the passenger placed in one of the seats 1100 releases a lanyard release pin 41 directly or by gripping one of the masks 25, the activation assembly 40 is adapted for activating the starter unit 22 and initiates the production of oxygen as described above.

The activation assembly 40 is provided according to the concept in a three component form; namely a mechanical release component 50, wherefrom the lanyard release pin 41 can be released, an actuator assembly comprising a shape memory material based actuator 10 and a mechanical starter component 60 which basically comprises the hammerstick 61 and the spring storage of the starter unit 22 as well as a starter release pin 62 for releasing the hammerstick 61 and thus exerting a spring force from the spring storage to the hammerstick 61.

The mechanical release component 50, thus, is adapted for being released by the at least one passenger, wherein, upon releasing the lanyard release pin 41, an OFF/ON-switch 51 turns a power unit 52 into a power supplying operation state; here by means of connecting the power line 53 by means of a switch 54. Thus, the power line 51 supplies electrical power then via an electrical activation line 11 to the fixation and connection and contacting element 12. Thereby, electrical power is received in a shape memory material 13 which. In this embodiment the shape memory material 13 is formed as a wire connecting the fixation, connection and contact element 12 to the starter release pin 62. Once powered electrically, the shape memory material 13 contracts and thus withdraws the starter release pin 62 from the hammer stick. Under tension of the spring storage, the hammer stick 61 then initiates the pyrotechnical chemical reaction on a cap of for instance phosphor powder, which reacts at temperatures of between 92°C - 110°C.

Of course, also a contraction situated shape memory material 13 instead can be replaced by an extension situated shape memory material without diverting from the concept of the instant invention. However, it turned out that release of a starter release pin 62 by means of a drag force is considered to be in preferred conformity with existing security systems established in aircraft emergency oxygen devices. Furthermore, a drag movement of the shape memory material 13 can be directly transferred to the starter release pin 62 and thus allows a secure and very effective transfer of the passenger's release of the lanyard release pin 41.

The fixation, connection and contact element 12 schematically shown, of course, can be further constructed in various forms for providing a preferably long and/or biased shape memory material 13. When in wire form, as in the instant embodiment, for instance in the fixation, connection and contact element 12, the wire made of shape memory material can be wind up in a mechanically biased, thus tensioned, state. Thus, even upon a small powering capacity and packed conditions in narrow room, nevertheless, a comparable large amplitude of movement can be exerted to the starter release pin 62. A ring 63 on the starter release pin 62 and/or the ring 43 on the lanyard release pin 41 is preferably provided for best fixation of the threads 31 and the shape memory material wire 13, respectively.

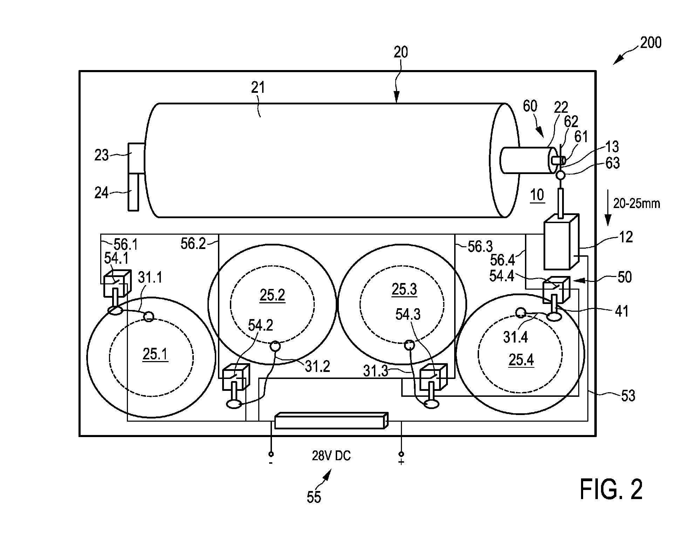

Fig. 2 shows more specifically a further developed emergency oxygen device 200, wherein the electrical scheme thereof is schematically shown. Also, identical or functional similar features or features of same, identical or similar function have been given the same reference marks as mentioned above for simplification. In Fig. 2 in particular the further developed features of the electrical scheme of the emergency oxygen device 200 is described in the following, whereas with regard to reference or numbers used it is indicated to the specification of Fig. 1. In the instant embodiment, four oxygen masks 25.1, 25.2, 25.3 and 25.4 are provided. Each of the oxygen masks again is connected to the oxygen source 20 to provide an oxygen flow via mask manifold and hoses 24, which are not shown in detail.

The shape memory material based actuator 10, here is shown in more detail as a box-like case, wherein the wire of shape memory material is wind-up in a biased state. Thus, powering of the shape memory material based wire by means of the fixation, connection and contact element 12 results in a movement amplitude of more or less in the range of between 20 to 25 mm, as indicated by the arrow next to the actuator 10.

A single power source providing a DC-voltage of 28V to a power line 53 is connected to the shape memory material based actuator 10, namely the fixation, connection and contact element 12. A switch 54 the DC-voltage is provided; namely each of the switches 54.1, 54.2, 54.3 and 54.4 in activation units to establish the mechanical release component 50 as outlined above. Each of the mechanical release parts 50 comprises a switch 54.1, 54.2, 54.3 and 54.4 as mentioned above. Each of the mechanical release parts 50 also provides for a thread 31.1, 31.2, 31.3, 31.4 connecting each of the lanyard release pins 41 to the oxygen masks 25.1, 25.2, 25.3, 25.4. Once a lanyard release pin 41 of the mechanical release component 50 is released by one of the passengers, one of the switches 54.1, 54.2, 54.3, 54.4 or more of the switches are closed. Consequently, the DC-voltage of 28V is applied to the power line 53 and to the fixation, connection and contact element 12 for powering the shape memory material based wire 13.

Thus, the power line 53 is closed by a number of switch lines 56.1, 56.2, 56.3 and 56.4 which connect the mask drop point module with the electrical switch for providing power to the single shape memory material based actuator 10.

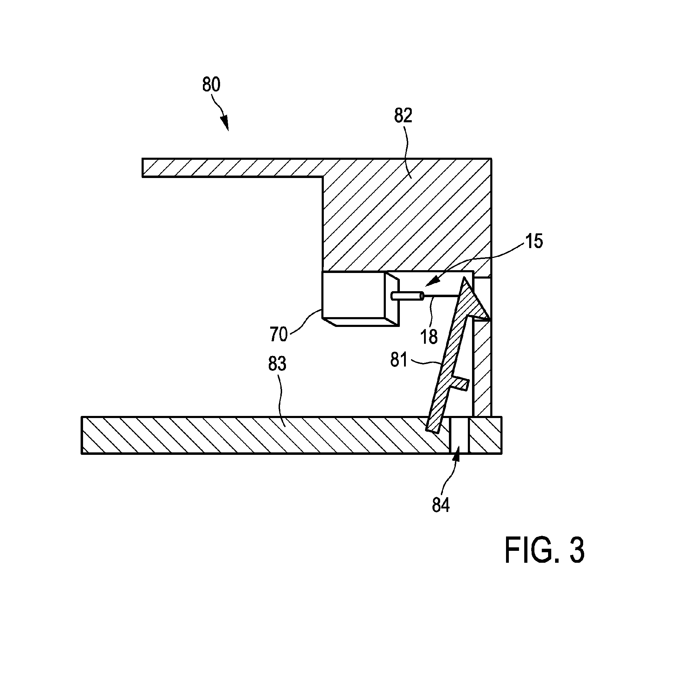

As shown in Fig. 3, the DC-voltage of 28V to a power line 53 of a power unit 55 can also be used to power a further fixation, connection and contact element 12 comprising a further shape memory material based actuator 15. Therein a shape memory material based actuator 80 based actuator is situated such to actuate a lever 81. The lever 81 is a component of a container housing 82 of a container 80 for an oxygen mask box. Once the lever 81 is actuated by the shape memory material wire 18, the lever 81 releases the container door 83 which then drops and allows the oxygen masks to drop from the container 80 near the passenger's mouth. In this case, the wind-up shape memory material based wire 18 allows a contracting movement amplitude of not less than 3 to 5 mm; the latter is sufficient to move the lever 81 substantially and provide the opening of the container door 83. Also a manual release of the container door 83 can be provided for security aspects, the container door 83 has a release hole 84. A passenger, when gripping through the release hole 84, is able to move the lever 81. Then immediately the container door 83 is allowed to drop and provide oxygen masks to the passengers.

In the combined system of shape memory material based actuation of the lever 81 in the container box 80 and shape memory material based actuation of the starter unit 60 a release will practically synchronously be activated by a passenger's activation of the mechanical release component 50. Thus, all essential features in a hazardous emergency situation are given to the passengers in as short time as possible.

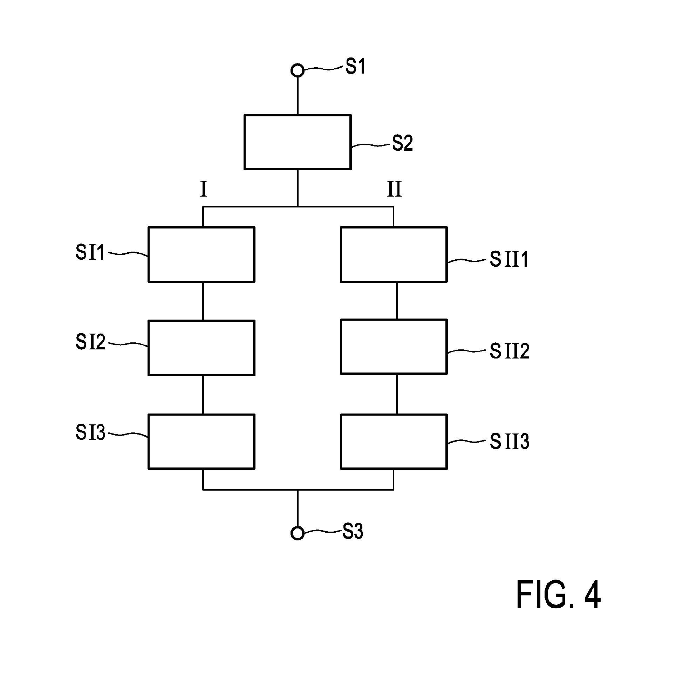

Fig. 4 shows schematically a preferred embodiment of a method for performing a method of emergency oxygen supply. In case of an emergency situation of step S1, one or more passengers may release a lanyard release pin 41 in a step S2. Thereupon, in branch I and branch II, synchronously a first shape memory material 18 and a further shape memory material 13 is contracted. Therefore in step SI1 and step SII1, the respective shape memory material 18, 13 is contracted. As a consequence, in step SI2, the container door 83 can open and in step SII2 the starter release pin 63 is released from the hammer stick 61. Consequently, in step SI3 a drop of one or more oxygen masks is allowed near all passengers in a row 1100 without significant delay. In step SII3 oxygen flow is initiated immediately, i.e. at the same time, by means of the oxygen source 20 as described above. In step S3 a passenger or a group of passengers has all useful and proper means available for help by means of an oxygen supply in an emergency situation.

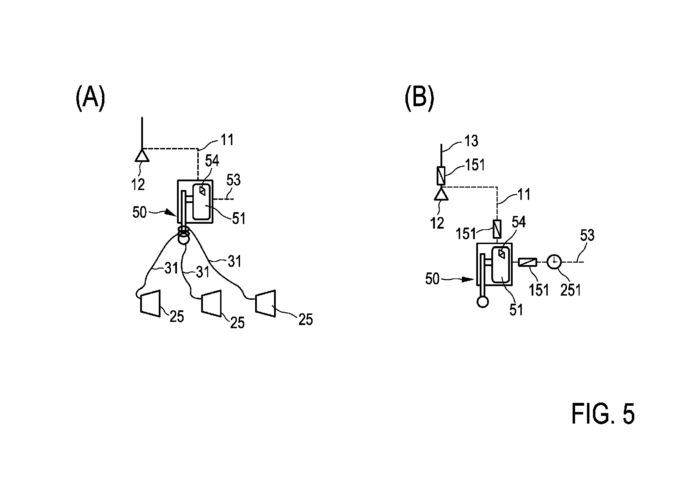

Fig. 5 shows more specifically options for interrupting the applied power. This has the advantage that load to the board powern et of the aircraft is limited to the time span of the actuation of the shape memory material or the emergency situation at least. Fig. 5A shows the power unit 52 wherein the On/Off switch 51 can deactivate the operation state by being switched off. As shown in Fig. 5B the powering can be interrupted or deactivated with at least one of an interrupting component. The interrupting component 151 can be placed between the shape memory material 13, and the contact element 12 and/or between contact element 12 and the power unit 52 and /or between power unit 53 and board. An interrupting component can be combined or replaced with a timeer component 251.

## Claims

1. An emergency oxygen device for at least one passenger of an aircraft, comprising:
- a chemical oxygen generator and/or oxygen pressure cylinder including an oxygen source and a starter unit adapted for initiating a reaction in said oxygen source producing oxygen,
- at least one oxygen mask each connected with the oxygen source such that an oxygen fluid flow from said oxygen source after said starter unit has initiated the reaction is receivable at the oxygen mask,
- an activation assembly for activating the starter unit,
**characterized in that**
the activation assembly comprises an actuator assembly comprising a shape memory material based actuator.

2. Emergency oxygen device as claimed in claim 1 wherein the actuator assembly is adapted for coupling actions of a passengers emergency release action and a reaction initiation of the oxygen source.

3. Emergency oxygen device as claimed in claim 1 or 2 wherein the activation assembly comprises
- a mechanical release component adapted to be released by the at least one passenger; and
- a mechanical starter component adapted for automated starting the starter unit; and wherein
- the mechanical starter component and the mechanical release component are coupled by said shape memory material based actuator adapted for being activated by the mechanical release component and for activating the mechanical starter component.

4. Emergency oxygen device as claimed in one of the preceding claims wherein
the actuator assembly comprises
- a power unit for powering said shape memory material based actuator upon activation of a switch, and/or
- a fixation element for holding the shape memory material based actuator.

5. Emergency oxygen device as claimed in one of the preceding claims wherein a connection of said shape memory material based actuator to the mechanical release component is established by means of a power unit for powering the shape memory material wherein a switch of the power unit can be activated by the mechanical release component.

6. Emergency oxygen device as claimed in one of the preceding claims wherein said shape memory material based actuator is formed as an elongate, in particular flexible bended, member connected to the mechanical release component and the mechanical starter component and wherein the mechanical release component comprises a first release pin releasable by the passenger and the mechanical starter component comprises a second release pin releasable by the elongate, in particular flexible bended, member.

7. Emergency oxygen device as claimed in one of the preceding claims wherein an oxygen mask is stored in a container and the container has a container door and/or wherein a further actuator assembly comprising a shape memory material based actuator is provided for actuating a release of the container door.

8. Emergency oxygen device as claimed in one of the preceding claims wherein said actuator comprising a shape memory material and the further actuator assembly comprising a shape memory material can be powered by the same power unit, in particular upon activation of a single switch.

9. Emergency oxygen device as claimed in one of the preceding claims wherein said actuator assembly and/or the further actuator assembly comprise a shape memory material in form of a metal, alloy, polymer or elastomer or dielectric material powerable by electric power and exhibiting, in particular reversible, pseudoelastic properties upon electrical power exertion.

10. Emergency oxygen device as claimed in one of the preceding claims wherein an elongate member, in particular flexible bended member, in particular a wire or rod or elongate bar, of said shape memory material is formed in said actuator assembly and/or the further actuator assembly.

11. Emergency oxygen device as claimed in one of the preceding claims wherein a wire of said shape memory material is placed in a guidance, in particular in a tube, and/or is wind up and/or reversed or diverted and/or mechanically biased.

12. Emergency oxygen device as claimed in one of the preceding claims wherein in a container a number of more than one, in particular two, three, four, five, six of more oxygen masks and said chemical oxygen generator are stored in a non-emergency situation and a number of releasable fixation elements are mounted at said container, in particular in a wall of said container, each fixation element is connected via a cable, wire or the like to an activation line coupled to a mechanical release component adapted for being released by the at least one passenger and each fixation element is further connected via a cable, wire or the like to a respective oxygen mask of said three oxygen masks.

13. Emergency oxygen device as claimed in one of the preceding claims wherein the chemical oxygen generator includes a chemical oxygen source and an activation unit for initiating a chemical reaction of said chemical oxygen source producing oxygen, and
each of the at least one oxygen masks is connected with the chemical oxygen generator for receiving an oxygen fluid flow from said chemical oxygen generator after said activation unit has initiated the chemical reaction.

14. Emergency oxygen device as claimed in one of the preceding claims wherein the powering of said shape memory material can be deactivated by an interrupting component, in particular for interrupting the applied current and /or for interrupting the power of the power unit.

15. Oxygen supply system of an arrangement of a number of oxygen supply devices according to one of the preceding claims in a ceiling-panel along an aircrafts cabin, in particular along an aircrafts cabin alley of seats, wherein each oxygen supply unit is stored in a container, in particular wherein the containers are arranged for respective support.

16. Method for activating an emergency oxygen device for at least one passenger of an aircraft, comprising:
- initiating by means of a starter unit a reaction of an oxygen source producing oxygen, wherein a chemical oxygen generator and/or oxygen pressure cylinder includes the oxygen source, wherein
- receiving at an oxygen mask an oxygen fluid flow from said oxygen source after said starter unit has initiated the reaction wherein each of the oxygen masks is connected with the oxygen source,
- activating the starter unit by means of an activation assembly,
**characterized in that**
the passengers emergency release action and the reaction initiation of the source is coupled by means of a shape memory material based actuator of a actuator assembly wherein the activation assembly comprises the actuator assembly.

17. Method as claimed in claim 16 wherein the activation assembly comprises
- a mechanical release component is released by the at least one passenger and
- a mechanical starter component automatically starts the starter unit; and wherein
- the mechanical starter component and the mechanical release component are coupled by said shape memory material based actuator being activated by the mechanical release component and activating the mechanical starter component.
